# EUROPEAN PATENT SPECIFICATION

(11) **EP 2 778 333 B1**
(45) Date of publication and mention of the grant of the patent: **03.08.2016**
(21) Application number: 14000867.3
(22) Date of filing: 11.03.2014
(51) Int. Cl.: E05F 15/00, E05F 15/43, G01V 8/20

(54) **Device for detecting obstacles for a motorised gate or the like**
Vorrichtung zur Hindernisdetektion für ein motorisiertes Tor oder dergleichen
Dispositif pour la détection des obstacles pour système motorisée de portail ou similaire

(30) Priority: 12.03.2013 IT VI20130065
(43) Date of publication of application: 17.09.2014
(73) Proprietor: BFT SpA, 36015 Schio (VI) (IT)
(72) Inventor: Panozzo, Federico, 36013 Piovene Rocchette (VI) (IT); Sprea, Renato, 36010 Treschè Conca di Roana (VI) (IT)
(74) Representative: Bettello, Pietro

(56) References cited:
- EP-A1- 2 256 277
- WO-A1-2006/051060
- US-A- 5 142 152
- US-A- 5 191 268
- US-A1- 2002 101 348

## Description

The present finding regards a device for detecting the presence of obstacles, applied to an automatic system for closing gates, with particular reference to the sliding and leaf gates, barriers, automatic doors and the like, according to the general part of claim 1.

The application of the recent European directives for the doors and gates automation industry, in particular the machinery directive and the EN13241-1 standard, requires the manufacturer of a motorised door to install accessories with the purpose of preventing or reducing the effects of impact and crushing people, animals or things present in the radius of manoeuvre of the door. The same standard requires, in many installation conditions, the application of at least one presence detection device of the optical type. Typically, the presence detection occurs by applying a light beam in the infrared field, between a transmitter unit and a receiver unit, arranged at the opposite sides of the passage whose access is controlled by a barrier or a gate. When the light beam intercepts a person or an interposed thing, the receiving unit sends a signal to the control unit, which interprets it as a control for stopping and inverting the actuator motion. In common use several pairs of sensors installed in various points and at various heights of the columns of the access passage of the gate or door both on the inner part and on the outer part of the same are applied.

The more and more severe security requirements often force installers to provide a perimeter around the hazardous area, even at different heights. Typically, the height may be at two heights, on the same side of the door, in particular in areas accessible to the public, or even in areas where the vehicle traffic consists of commercial vehicles which have a height from the ground such not to be intercepted by a single installed pair. In these complex configurations interferences between pairs of sensors may be created. In particular, if at least two pairs of sensors are installed on the same side with respect to the door, the light beam emitted by the transmitter of the first pair could also be intercepted by the receiver of the second pair, thus constituting the situation of potential hazard. The obstruction - by an obstacle - of the light beam of the first pair would no longer be interpreted as such and no switching signal would be transmitted to the control unit, which would continue to control the closing manoeuvre, without interrupting it, like it would instead occur in case of installation of a single pair of sensors. Paradoxically this installation, without any precaution, would lead to a higher risk level with respect to what occurs in the configuration of a single pair of sensors. In order to overcome this drawback the manufacturers of automatism and presence detection devices have adopted various strategies. The first and the most obvious one, is that of suggesting to the installer an opposite configuration of the two transmitter and receiver pairs. In other words the transmitter of the first pair must be installed on the same side with respect to the monitored passage of the receiver of the second pair and vice versa. This allows to eliminate the probability of interferences between pairs of devices, but delegating to the installer the necessary precautions. Nothing prevents that this installation is incautiously installed without taking into account this caution, given that it is an indication of the installation manual which is not necessarily considered by the installer, thus, the modifications of the alignment between the transmitter and receiver over time would lead the installer to fail to immediately identify the interference. Some manufacturers have tried to overcome this drawback, by adopting solutions that inherently prevent any interference.

In document US7291998B2 a very simple solution of synchronising the signal is adopted. The system supplies in phase alternation the first pair and the second pair, using an alternating source of power, generally 24VAC: in a period, the positive semi-wave supplies a pair of devices and in the subsequent one the negative semi-wave supplies the other pair. Circuits for generating a modulated signal (oscillators or microcontrollers) are not required, in that it is the non-rectified source of power which provides a simple and elementary synchronism to the system, alternatingly supplying a pair instead of the other. Each interference is thus eliminated, without having to use the inversion of the direction of the transmitter and receiver pair. This solution has its main drawback lying in the fact that it is not compatible with a direct current supply, whereas all control units utilise now rectified voltages for not only supplying the motors which are by now almost always in direct current, but also accessory services.

Another adopted solution is a connection of the "BUS" serial type between a control unit of the so-called "Master" type and the accessory devices of the so-called "Slave" type, including the sensors for detecting the obstacles: upon allocating identification addresses to the latter, the control unit periodically queries the status of the "Slave", obtaining a response according to a protocol which comprises both the status of the pair of sensors (occupied by an obstacle, not occupied), and the address of the pair. This allows to address, in the commonly implemented solution up to date, up to sixteen accessory devices. The architecture of the system is complex and it is not compatible with actuation systems of the conventional type; furthermore, each accessory device must be provided with a microcontroller and the complexity and the costs are unproportional to the obtained benefits, at least for the solution of the problem subject of the present finding.

An object of the present finding is to provide a device for detecting obstacles, adapted for the installation on motorised doors and gates, which allows in an easy and inherently inexpensive manner to eliminate the interference between at least two pairs of installed photocells, overcoming all the limitations of the aforementioned solutions as known in the prior art. The interference between the two pairs of sensors is eliminated through the emission of a pulse infrared light beam and a variable period on at least two distinct values, the transmitter and receiver of the same pair being synchronised in the installation step for sending and receiving a signal with the same pulse frequency. The regulation means may be of the "DIP-Switch" type, or bridges; according the invention, by simplifying and eliminating components, the adjustment is obtained by opening a printed circuit board track, provided in an end and accessible part, so as to be cut by the operators during the installation step.

The present finding shall now be illustrated and described in detail, with reference to a particular embodiment thereof provided by way of non-limiting example, with reference to the attached drawings, wherein:
- fig 1 illustrates a general view of a motorised system with two pairs of photocells positioned at different heights;
- fig 2 illustrates the variation of the emission frequency of the light beam, on two distinct pulse frequency values;
- fig 3 illustrates a part of the circuit for regulating the pulse frequency of the transmitted signal;
- figs 4 to 9 illustrate - in sequence - a method for setting and restoring the pulse frequency of the transmitted signal.

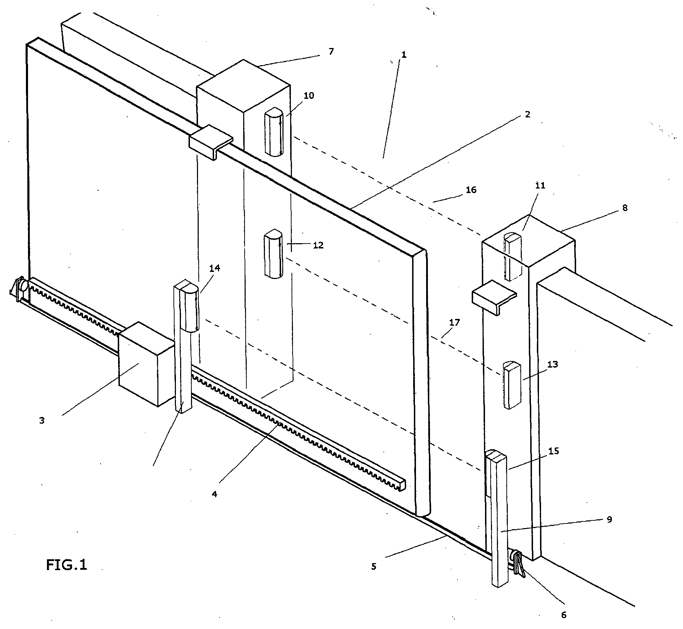

As observable in fig 1, the access passage 1 is closed by a mobile barrier or gate 2, actuated by the motor 3 through a rack 4, along the track 5 between the mechanical stop elements 6. To the lateral uprights 7 and 8 of the access passage and on the columns 9 the transmitter unit 10 and the receiver unit 11 of the first pair of sensors and the transmitter unit 12 and the receive unit 13 of the second pair 12-13 are fixed, which intercept through the infrared beam lights 16 and 17 possible obstacles present during the actuation, sending a suitable signal to the control unit of the motor 3, the second pair of sensors also being supplied thereby. By way of example, in fig 1 a further transmitter-receiver pair 14 and 15, which is not part of the present finding, was added. As observable in fig 1, the two transmitter and receiver pairs 10-11 and 12-13 have the same direction of transmission, though the mutual distance is not sufficient to avoid interferences between the two pairs, this normally being unadvisable in the installations in the current state of the art.

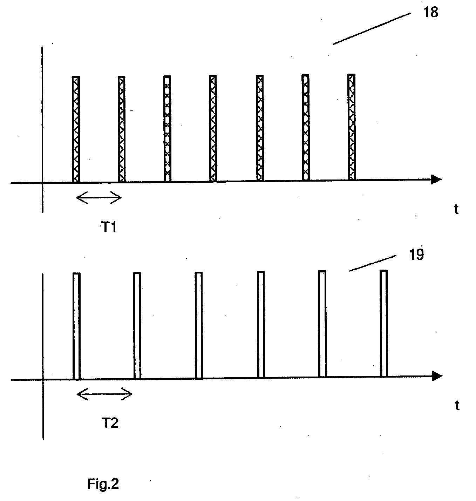

In Fig 2 two examples of pulse infrared light beams transmitted in at least two distinct ways with frequency configured on two values, the amplitude and duration of the pulse remaining unvaried, are represented. In the case illustrated in such figure, the light pulse has a duration of twenty microseconds in both pairs of sensors, while the time that elapses between one pulse and the other is variable, in particular T1 amounts to 3ms for the pair of elements 10-11 represented by the series of pulses 18, T2 has the value of 4ms for the pair 12-13, represented by the series of pulses 19. The receiver 13 evidently cannot recognise the signal transmitted by the transmitter of the pair 10 and vice versa.

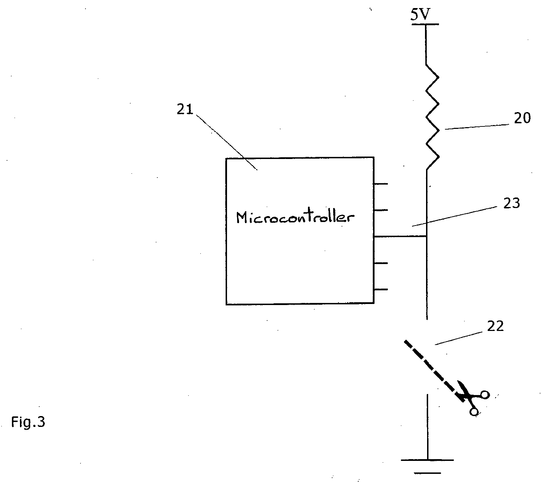

Fig 3 illustrates the method of regulating at least one of the two pairs of sensors, through a per se known resistance 20 of the "PULL UP" type, the logic input of the microcontroller 21, both of the transmitter and the receiver of the same pair of sensors being indicated with reference 23. By opening the circuit in the opening 22, both in the transmitter, and in the receiver, the logic input voltage 23 passes from a null value ("ground") to 5V and vice versa. The operation is carried out by the installer on both transmitter and receiver devices of the same pair; this allows the recognition of the signal coming from the transmitter coupled thereto, given that interferences with any other pair of sensors, for example those indicated with references 12 and 13, are impossible.

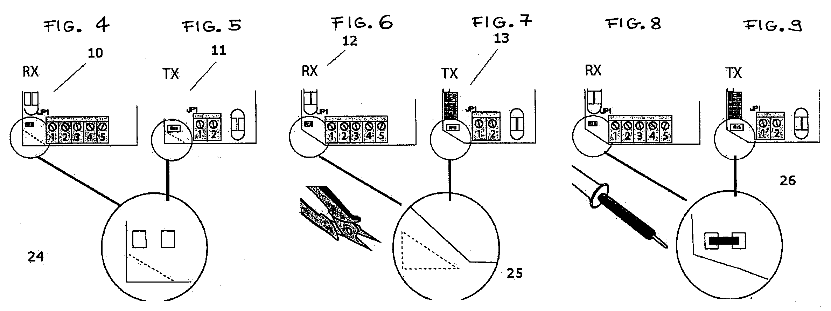

Figs 4 to 9 instead illustrate a simplified method for performing the operation of opening the circuit at the point 22 of the printed circuit board of the transmitter and of the respective receiver, operation performed both on the transmitter and on the receiver by cutting an end part of the printed circuit board, the default configuration being indicated with 24, the modified configuration being indicated with 25 as regards the frequency and the initial configuration restored by welding being indicated with 26.

The elements for executing the present finding may vary as regards the shape, dimensions, materials and arrangement without departing from the scope of the adopted idea and thus remaining within the scope of protection provided by the following claims.

### List of elements indicated in the drawings.

- 1: Access passage
- 2: Gate
- 3: Actuation motor
- 4: Rack
- 5: Guide track
- 6: Mechanical stop elements
- 7: Left lateral upright
- 8: Right lateral upright
- 9: Photocells holder columns
- 10: Infrared transmitter of the first pair
- 11: Infrared receiver of the first pair
- 12: Infrared transmitter of the second pair
- 13: Infrared receiver of the second pair
- 14: Infrared transmitter of the third pair
- 15: Infrared receiver of the third pair
- 16: Infrared rays beam of the first pair of sensors
- 17: Infrared rays beam of the second pair of sensors
- 18: Series of pulses before the configuration in frequencies
- 19: Series of pulses after the configuration of the frequency
- 20: "PULL-UP" resistance
- 21: Microcontroller
- 22: Opening of the circuit
- 23: Logic input of microcontroller
- 24: Default configuration
- 25: Modified configuration
- 26: Restored initial configuration.

## Claims

1. DEVICE FOR DETECTING OBSTACLES FOR A MOTORISED GATE OR THE LIKE, comprising at least two pairs of sensors each of which is formed by a transmitter and by a receiver (10, 11; 12, 13) and a beam of infrared rays (16 and 17), the pairs of sensors being arrangeable at the outer sides of an access passage (1), controlled by the gate (2) or the like, having the same direction of transmission and being able to signal to a motor control unit (3) of the gate the obstruction by an obstacle of said infrared signal, said device providing that a transmitter (12) and a receiver (13) belonging to the same pair can be configured to emit and receive an infrared signal at at least two pulse frequencies to avoid interference between the two pairs of sensors, the device being **characterised in that** the configuration of the pulse frequency of the transmitter (12) and the receiver (13) of the same pair occurs through the modification of the voltage of a logic input (23) of a micro-controller (21) of the device, at at least two voltage values corresponding to at least two distinct emission and reception frequencies, the configuration of the pulse frequency occurs by cutting of a printed circuit board of the transmitter and the respective receiver.

2. DEVICE FOR DETECTING OBSTACLES, according to claim 1, **characterised in that** the configuration of the initial default frequency (24) can be restored through a welding operation.

## Patentansprüche

1. VORRICHTUNG ZUR HINDERNISDETEKTION FÜR EIN MOTORISIERTES TOR ODER DERGLEICHEN, umfassend mindestens zwei Paare von Sensoren, die jeweils aus einem Sender und einem Empfänger (10, 11; 12, 13) und einem Bündel von Infrarotstrahlen (16 und 17) gebildet sind, wobei die Paare von Sensoren auf den äußeren Seiten eines Zugangs (1) anordenbar sind, der durch das Tor (2) oder dergleichen gesteuert wird, die dieselbe Übertragungsrichtung haben und in der Lage sind, einer Motorsteuereinheit (3) des Tors die Behinderung durch ein Hindernis des Infrarotsignals anzuzeigen, wobei die Vorrichtung vorsieht, dass ein Sender (12) und ein Empfänger (13), die zu demselben Paar gehören, konfiguriert werden können, um ein Infrarotsignal mit mindestens zwei Impulsfrequenzen zu senden und zu empfangen, um Störungen zwischen den beiden Sensorpaaren zu vermeiden, wobei die Vorrichtung **dadurch gekennzeichnet ist, dass** die Konfiguration der Impulsfrequenz des Senders (12) und des Empfängers (13) desselben Paares durch die Änderung der Spannung eines Logikeingangs (23) einer Mikrosteuereinheit (21) der Vorrichtung bei mindestens zwei Spannungswerten erfolgt, die mindestens zwei verschiedenen Sende- und Empfangsfrequenzen entsprechen, die Konfiguration der Impulsfrequenz durch Ausschneiden einer gedruckten Schaltplatine des Senders und des entsprechenden Empfängers erfolgt.

2. VORRICHTUNG ZUR HINDERNISDETEKTION nach Anspruch 1, **dadurch gekennzeichnet, dass** die Konfiguration der anfänglichen Standardfrequenz (24) durch einen Schweißvorgang zurückgesetzt werden kann.

## Revendications

1. DISPOSITIF POUR LA DETECTION D'OBSTACLES POUR UN PORTAIL MOTORISE OU SIMILAIRE, comprenant au moins deux paires de capteurs, chacun desquels est formé par un émetteur et par un récepteur (10, 11 ; 12, 13) et un faisceau de rayons infrarouges (16 et 17), les paires de capteurs pouvant être agencées au niveau des bords extérieurs d'un passage d'accès (1), contrôlé par le portail (2) ou similaire, ayant la même direction de transmission et étant adaptés pour signaler à une unité de commande de moteur (3) du portail l'obstruction par un obstacle dudit signal infrarouge, ledit dispositif prévoyant qu'un émetteur (12) et un récepteur (13) appartenant à la même paire puissent être configurés pour émettre et recevoir un signal infrarouge à au moins deux fréquences d'impulsions pour éviter une interférence entre les deux paires de capteurs, le dispositif étant **caractérisé en ce que** la configuration de la fréquence d'impulsions de l'émetteur (12) et du récepteur (13) de la même paire s'effectue par le biais de la modification de la tension d'une entrée logique (23) d'un microcontrôleur (21) du dispositif, à au moins deux valeurs de tension correspondant à au moins deux fréquences distinctes d'émission et de réception, la configuration de la fréquence d'impulsions s'effectue en découpant une carte de circuit imprimé de l'émetteur et du récepteur respectif.

2. DISPOSITIF POUR LA DETECTION D'OBSTACLES, selon la revendication 1, **caractérisé en ce que** la configuration de la fréquence initiale par défaut (24) peut être rétablie par le biais d'une opération de soudure.
